# EUROPEAN PATENT APPLICATION

(11) **EP 4 613 889 A1**
(43) Date of publication of application: **10.09.2025**
(21) Application number: 24197741.2
(22) Date of filing: 30.08.2024
(51) Int. Cl.: C22C 1/04, B22F 9/08, B22F 10/28, B22F 10/50, B22F 10/64, B33Y 70/00, B33Y 80/00, C22C 1/10, C22C 21/00

(54) **METHOD OF MAKING COMPONENTS WITH AI-TI-C METAL MATRIX COMPOSITES AND COMPONENTS MADE THEREFROM**

(30) Priority: 08.03.2024 US 202418600506
(71) Applicant: Purdue Research Foundation, West Lafayette, IN 47906 (US)
(72) Inventor: WANG, Xiaoming, Indiana, 47906 (US)
(74) Representative: Mathys & Squire

(57) **Abstract**

Methods of producing structural components and MMCs therefor. Such a method includes reacting graphite with titanium in the form of K₂TiF₆ or a pure element or an alloying element in molten aluminum with at least one alloying element added to form a first melt, casting an ingot with the first melt, wherein the ingot is an Al-Ti-C metal matrix composite containing TiC particles, Al₃Ti particles and particles of a compound of aluminum with the at least one alloying element all dispersed in an aluminum alloy matrix, remelting the ingot to form a second melt, forming a powder of the metal matrix composite by an atomization process of the second melt in vacuum, and fabricating a structural component utilizing the powder in an additive manufacturing process.

## Description

### BACKGROUND OF THE INVENTION

The present invention generally relates to fabrication of aluminum matrix composites. The invention particularly relates to the fabrication of aluminum matrix composites for high strength lightweight applications, and fabrication of structural components from such composites by additive manufacturing.

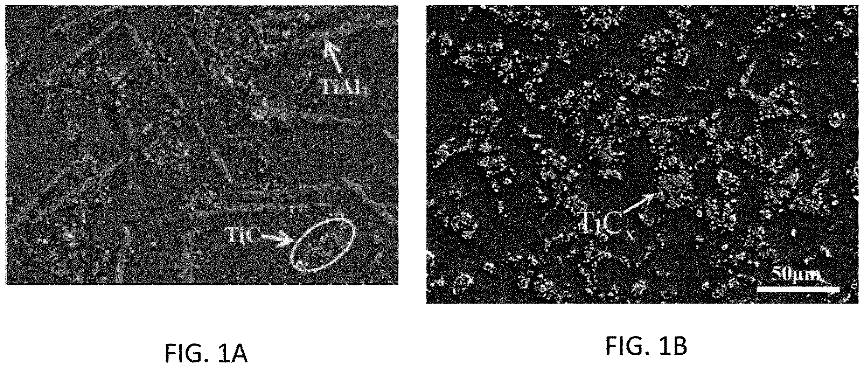

Desirable properties of metal matrix composites (MMCs) are well documented in literature. Al-Ti-C MMCs are produced through traditional casting processes with a typical casting microstructure where TiC reinforcing particles are pushed by the growing front of solid aluminum into aluminum grain boundaries and clusters away from aluminum grain centers where larger Al₃Ti particles are situated. Two typical microstructural images of Al-TiC composites with different amounts of Al₃Ti are shown in FIGS. 1A and 1B, which are scanning electron microscopy (SEM) images. Referring to FIG. 1A, the large blocky and plate-like particles are Al₃Ti and the smaller particles are TiC. The TiC particles are also situated in the grain boundaries, forming clusters in the absence of Al₃Ti particles in casting products (FIG. 1B). The segregation of reinforcing particles makes the production of a homogeneous dispersion of reinforcing particles, and therefore uniform properties, difficult through traditional casting processes.

Considerable efforts have been made to promote more homogeneous dispersions of reinforcing particles, including additions of other alloying elements to modify the Al particle interface, agitation by applying external field during solidification, spray forming, and emerging additive manufacturing. Among these efforts, additive manufacture as an emerging technology of producing high strength metals and alloys has shown great potential. However, additive manufacture has not been widely applied to MMCs, particularly MMCs with in-situ TiC reinforcing particles, for several reasons. A prime reason is the difficulties of producing submicron/nano-size in-situ TiC reinforcing particles for atomization because large size TiC particles clog spray nozzles used in the atomization process. To add ex-situ (pre-formed) ceramic particles always results in the formation of clusters and weak ceramic/matrix interfacial bonding, and therefore poor properties, despite improved properties having been reported. Another reason is the lack of knowledge about the intermetallic/ceramic phases in the Al-Ti-C alloying system.

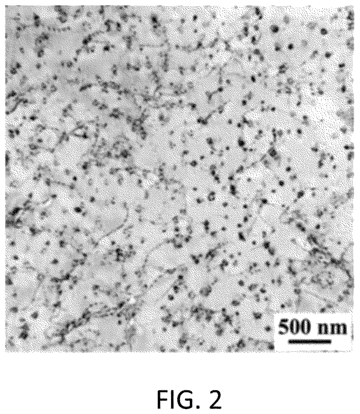

Scandium (Sc) has been used in the production of high strength aluminum alloys for high strength applications. Scandium has a very low solubility in aluminum (estimated at 0.21 atm%) and provides precipitation hardening after heat treatment. However, Sc is expensive and is typically only used in small quantities. Therefore, Sc is generally used in combination with other alloying elements to promote better performance. FIG. 2 shows the precipitation of Al₃Sc in an aluminum matrix and a strong effect on blocking the slip of dislocations. See Marquis et al, Acta Materialia 51 (2003) 4751-4760), whose contents are incorporated by reference.

As the demand for high strength applications of aluminum increases, especially from aerospace industries, there is an unmet need for less expensive processes for producing Al-Ti-C MMCs with a homogeneous dispersion of reinforcing particles, especially where the particles include both TiC particles and Al₃Sc resulting in superior mechanical properties for the MMCs.

### BRIEF SUMMARY OF THE INVENTION

The intent of this section of the specification is to briefly indicate the nature and substance of the invention, as opposed to an exhaustive statement of all subject matter and aspects of the invention. Therefore, while this section identifies subject matter recited in the claims, additional subject matter and aspects relating to the invention are set forth in other sections of the specification, particularly the detailed description, as well as any drawings.

The present invention provides, but is not limited to, methods of producing structural components and MMCs therefor.

According to a nonlimiting aspect of the invention, a method of manufacturing a structural component includes reacting graphite with titanium in the form of K₂TiF₆ or a pure element or an alloying element in molten aluminum with at least one alloying element added to form a first melt, casting an ingot with the first melt, wherein the ingot is an Al-Ti-C metal matrix composite containing TiC particles, Al3Ti particles and particles of a compound of aluminum with the at least one alloying element all dispersed in an aluminum alloy matrix, remelting the ingot to form a second melt, forming a powder of the metal matrix composite by an atomization process of the second melt in vacuum, and fabricating a structural component utilizing the powder in an additive manufacturing process.

According to another nonlimiting aspect of the invention, a structural component is provided made of an Al-Ti-C metal matrix composite, wherein TiC particles, Al3Ti particles, and Al3Sc particles are dispersed in an aluminum-based matrix.

Technical aspects of methods as described above preferably include the capability of producing Al-Ti-C MMCs with a homogeneous dispersion of reinforcing particles, especially where the particles include both TiC particles and Al₃Sc resulting in superior mechanical properties for the MMCs.

Other aspects and advantages will be appreciated from the following detailed description as well as any drawings.

### BRIEF DESCRIPTION OF DRAWINGS

FIGS. 1A and 1B are scanning electron microscopy (SEM) images of cast Al-Ti-C metal matrix composites (MMCs) containing different amounts of titanium. The formation of TiC clusters is clear both with the presence of larger Al₃Ti particles (FIG. 1A) and without the presence of larger Al₃Ti particles (FIG. 1B).
FIG. 2 shows precipitates of Al₃Sc in an aluminum matrix showing a strong effect on blocking dislocations.
FIGS. 3A and 3B are images showing the morphology and microstructures, respectively, of gas-atomized Al-Ti-C-Sc powders suitable for use in additive manufacturing of an MMC.
FIG. 4 shows a dispersion of TiC particles in an additive manufactured Al-Ti-C-Sc MMC produced with the powders of FIGS. 3A and 3B.

### DETAILED DESCRIPTION OF THE INVENTION

The intended purpose of the following detailed description of the invention and the phraseology and terminology employed therein is to describe what is shown in the drawings, which include the depiction of and/or relate to one or more nonlimiting embodiments of the invention, and to describe certain but not all aspects of what is depicted in the drawings, including the embodiment(s) to which the drawings relate. The following detailed description also describes certain investigations relating to the embodiment(s), and identifies certain but not all alternatives of the embodiment(s). As nonlimiting examples, the invention encompasses additional or alternative embodiments in which one or more features or aspects described as part of a particular embodiment could be eliminated, and also encompasses additional or alternative embodiments that combine two or more features or aspects described as part of different embodiments. Therefore, the appended claims, and not the detailed description, are intended to particularly point out subject matter regarded to be aspects of the invention, including certain but not necessarily all of the aspects and alternatives described in the detailed description.

To meet the industrial demand for high strength aluminum alloys, the following discloses methods suitable for additive manufacturing of MMCs containing aluminum. The MMCs contain Al-Ti-C alloys, in which Al represents aluminum or an alloy thereof. The Al-Ti-C alloys (systems) contain one or more rare earth elements, of which at least one is scandium (Sc), and as such are also referred to herein as Al-Ti-C-Sc alloys (or systems) and MMCs formed therewith are referred to herein as Al-Ti-C-Sc MMCs. The MMCs contain TiC, Al₃Ti, and Al₃Sc as reinforcing (reinforcement) particles. Investigations leading to the present invention have evidenced that the strength of additive manufactured Al-Ti-C-Sc MMCs is higher than those of cast/wrought aluminum alloys and MMCs with similar compositions.

Additive manufactured MMCs produced by the additive manufacturing of Al-TiC-Sc MMCs as disclosed herein contain a certain amount of scandium for effective solution and precipitation hardening, since significant strengthening properties of Sc have been identified, as shown in FIG. 2. Another beneficial effect of Sc addition is to improve the processing ability of the MMCs due to enhanced weldability of Sc-containing aluminum alloys. In the additive manufactured Al-Ti-C-Sc MMCs disclosed herein, scandium may be partly or entirely replaced by other alloying elements, such as zirconium (Zr), to lower the cost of materials. As mentioned above, TiC particles have a high tendency to segregate at the aluminum grain boundaries and segregate into clusters. TiC particles are, therefore, more effective in grain boundary strengthening. Al₃Ti particles are generally situated in the aluminum grain centers through a peritectic reaction during solidification to nucleate aluminum grains, which form the matrix of the MMC. Upon reduction of the titanium content, titanium dissolves into aluminum as a solute for solution hardening. For purposes of this disclosure, precipitation hardening is a metallurgical term referring to strengthening as a result of the formation of precipitates. The contents of the alloying elements, Ti, C, and Sc (as well as optional alloying elements, such as Zr), can vary depending on the purpose of applications that require different strengths. TiC particles may be dissolved into the aluminum alloy melt together with Al₃Ti particles during remelting and/or additive manufacturing, but precipitate out during cooling during atomization and/or additive manufacturing, which refines the TiC and Al₃Ti to effectively benefit the mechanical properties of the components produced therefrom.

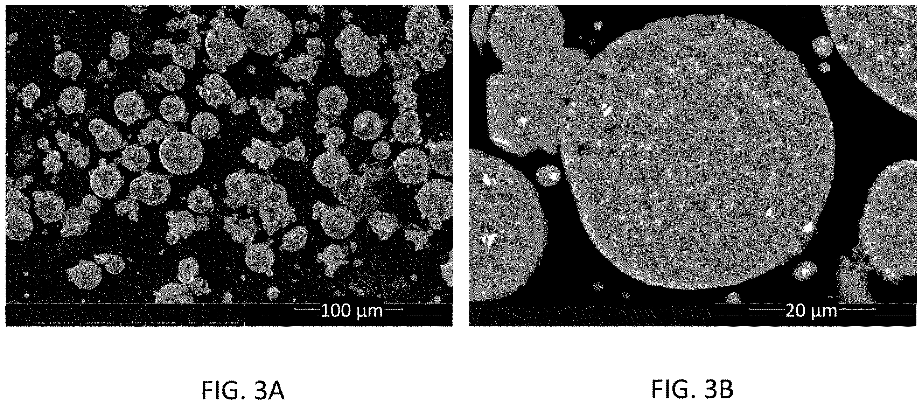

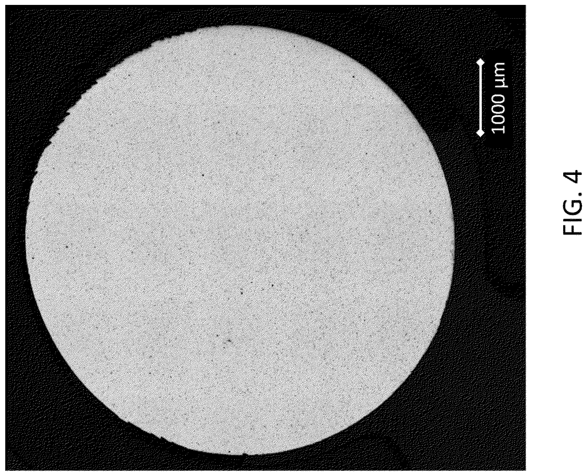

In the present disclosure, in an Al-Ti-C system micrometer to submicron/nanometer-sized TiC particles can be produced with or without Al₃Ti particles in an aluminum matrix, depending on cooling rate from liquid to solid. The matrix can be one of various different aluminum alloys containing Sc depending on the intended application. The MMCs may be made into powders through any kind of powder production method, such as gas atomization. As an example, FIGS. 3A and 3B depict the morphology and microstructure of atomized powders of an Al-Ti-C-Sc MMC. The powders can be then deposited and heated by a laser beam or other means of heating to form a structural component by additive manufacturing. According to a preferred aspect of the invention, such a structural component is characterized by having a homogeneous dispersion of TiC particles, a nonlimiting example of which is shown in FIG. 4.

In an approach adopted in investigations leading to the present invention, production of MMC materials was achieved by reacting graphite with titanium in the form of K₂TiF₆ salt or pure Ti metal or elemental Ti in an aluminum alloy melt and casting into ingots to produce TiC and Al₃Ti particles in an aluminum alloy matrix. The cast ingots are re-melted in a crucible and atomized into powders in a vacuum. The melt can also be atomized into powders directly in a vacuum, depending on the capabilities of the production facility. In preferred embodiments, the MMC materials contain scandium as an alloying element. The MMC materials may further or alternatively contain additional or other alloying elements, such as but not limited to zirconium. A structural component can then be fabricated utilizing these powders and employing well-known additive manufacturing techniques such as, but not limited to, powder bed fusion or material jetting etc. In some embodiments of this disclosure, the alloying element is not added to the salt and molten aluminum, but is added during the remelting of the cast ingot.

Structural components fabricated by additive manufacturing as described herein have a microstructure such as shown in FIG. 4, which is characterized by a homogeneous dispersion of TiC, Al₃Ti, and Al₃Sc particles. FIG. 4 shows large un-melted TiC particles (less than 2µm in average diameter) situated along the aluminum grain boundaries, and smaller Al₃Sc and TiC precipitates (less than 100 nm in diameter) dispersed inside the aluminum grains. The larger TiC particles can also be dispersed inside aluminum grains, depending on the cooling rate and processing history. Lower cooling rates (slower cooling) result in TiC particles segregating towards grain boundaries. The grains are also refined effectively due to the high nucleation rate of aluminum grains in the presence of TiC and Al₃Sc particles, which are well-known to be grain refiners. The structural components can optionally be heat treated to promote the precipitation of Al₃Sc and TiC nanoparticles, though in the investigations it was determined that heat treatment may not be needed for precipitation, and instead suitable precipitation is able to occur during additive manufacturing in which laser heating is employed.

Compared to cast MMCs and additive manufactured alloys, the advantages of the process described above include (but are not limited to): achieving a homogeneous dispersion of reinforcing particles in an aluminum alloy matrix; strengthening through dispersion of TiC particles at both the grain boundaries and inside grains; simultaneous solution and precipitation hardening by particles of Al₃Ti and/or Al₃Sc and/or TiC inside aluminum grains; and the ability to produce aluminum MMCs in complex shapes with high strength for high strength applications. As a nonlimiting example, the investigations produced an Al-Mg-Mn-Fe alloy matrix MMC containing particles of Al₃Ti, Al₃Sc, and TiC that exhibited a yield strength of about 420 MPa and an elongation of 14%. The microstructure of the additive-manufactured Al-Mg-Mn-Fe alloy matrix MMC is shown in FIG. 4. Powders used to produce the MMC of FIG. 4 are shown in FIGS. 3A and 3B. FIG. 3B shows the microstructure of the powder in which TiC particles are present along boundaries of aluminum grains that are a few micrometers in diameter. Smaller TiC particles (not visible) are present inside the aluminum grains. FIG. 3B further shows Al₃Sc and Al₃Ti particles, among which the Al₃Ti particles tend to be larger than the Al₃Sc and TiC particles.

Additive manufacturing methods utilized as described herein are capable of increasing the high strength and temperature performance of an Al-Ti-C MMC, including Al-Ti-C and Al-Ti-C-AhTi, through grain refinement, precipitation hardening, and secondary phase strengthening. Hence the method of making microstructural features as described herein are well suited for structural components for high strength and elevated temperature applications. Such components include, but not limited to, aircraft components, aircraft and automotive engines, and components thereof._MMCs as disclosed herein can have at least the same level of strength observed in a wrought matrix alloy after T6 heat treatment, known to those skilled in the art. As an example, the additive manufactured Al-Mg-Mn-Fe alloy matrix MMCs produced as described herein is capable of having a yield strength that is nearly double the yield strength of the wrought and heat-treated matrix alloy.

A structural component made of an Al-Ti-C MMC as described herein is characterized by TiC particles, Al₃Ti particles, and Al₃Sc particles as reinforcing particles dispersed in an aluminum matrix or aluminum alloy matrix. In such an aluminum-based matrix, some large TiC particles are mostly along grain boundaries of the MMC while smaller TiC and Al₃Sc particles are mostly inside grains of the MMC. In preferred embodiments, the average size of the larger TiC particles is about 2 micrometers and the average sizes of the smaller TiC and Al₃Sc articles are about 80 nanometers.

It should be noted that methods as disclosed herein provide precipitation hardening by Al₃Sc and smaller TiC particles while reinforcing by large TiC particles along the aluminum grain boundaries. Previous methods have targeted these effects by casting and heat treating castings. The methods disclosed herein are capable of achieving this by additive manufacturing and yield finer particles in a matrix than those that can be produced through casting and heat treatment. The finer particles achieved with methods disclosed herein and structural components produced thereby result in superior strength and mechanical properties as compared to prior methods and components made thereby. It should also be noted that some strengthening in the embodiments of this disclosure also arises from solution strengthening.

Examples and preferred features are provided in the following numbered clauses:
Clause 1. A method for manufacturing a structural component, the method comprising:
   reacting graphite with titanium in the form of K₂TiF₆ or pure Ti metal or elemental Ti in molten aluminum with at least one alloying element added to form a first melt;
   casting an ingot with the first melt, wherein the ingot is an Al-Ti-C metal matrix composite containing TiC particles, Al₃Ti particles and particles of a compound of aluminum with the at least one alloying element all dispersed in an aluminum alloy matrix;
   remelting the ingot to form a second melt;
   forming a powder of the metal matrix composite by an atomization process of the second melt in vacuum; and
   fabricating a structural component utilizing the powder in an additive manufacturing process.
Clause 2. The method of clause 1, wherein the at least one alloying element is scandium and the compound of aluminum with the at least one alloying element is Al₃Sc.
Clause 3. The method of clause 1, wherein the at least one alloying element is zirconium and the compound of aluminum with the at least one alloying element is Al₃Zr.
Clause 4. The method of clause 1, wherein the structural component contains a homogeneous dispersion of the TiC particles, the Al₃Ti particles, and the particles of the compound.
Clause 5. The method of clause 1 further comprising heat treating the structural component.
Clause 6. The method of clause 5, wherein the heat treating is done by laser heating of the powder during the additive manufacturing process of the structural component.
Clause 7. The method of clause 5, wherein the heat treating is performed on the structural component after the additive manufacturing process.
Clause 8. The method of clause 5, wherein the heat treating comprises precipitation hardening by precipitates of the compound of aluminum with the alloying element and dissolved TiC.
Clause 9. The method of clause 2, further comprising precipitation hardening wherein the precipitates comprise Al₃Sc.
Clause 10. The method of clause 1, wherein the at least one alloying element comprises two alloying elements.
Clause 11. The method of clause 10, wherein the two alloying elements are scandium and zirconium, and the compound is Al₃Sc and Al₃Zr.
Clause 12. The method of clause 1, wherein the at least one alloying element is a rare earth element.
Clause 13. A structural component made of an Al-Ti-C metal matrix composite, wherein TiC particles, Al₃Ti particles, and Al₃Sc particles are dispersed in an aluminum-based matrix.
Clause 14. The structural component of clause 13, wherein at least some TiC particles are along grain boundaries of the metal matrix composite and at least some Al₃Sc particles are inside grains of the metal matrix composite.
Clause 15. The structural component of clause 14, wherein the TiC particles along the grain boundaries have an average size of about 2 micrometers and smaller TiC particles are inside aluminum gains and have an average size of about 80 nanometers.
Clause 16. The structural complement of clause 14, wherein the Al₃Sc particles have an average size of about 80 nanometers.
Clause 17. The structural component of clause 13, wherein the structural component is an aircraft engine or an aircraft component.
Clause 18. The structural component of clause 13, wherein the structural component is an automotive engine or an automotive component.
Clause 19. A method for manufacturing a structural component, the method comprising:
   reacting graphite with titanium in the form of K₂TiF₆ or pure Ti metal or elemental Ti in molten aluminum with at least one alloying element added to form a first melt, the at least one alloying element being scandium and/or zirconium;
   casting an ingot with the first melt, wherein the ingot is an Al-Ti-C metal matrix composite containing TiC particles, Al₃Ti particles, and Al₃(Sc,Zr) particles all dispersed in an aluminum matrix;
   remelting the ingot to form a second melt and adding an additional amount of the at least one alloying element to the second melt;
   forming a powder of the metal matrix composite by an atomization process of the second melt, wherein the grains of the powder contain TiC particles, Al₃Ti particles, and Al₃(Sc,Zr) particles all dispersed in an aluminum matrix; and
   fabricating a structural component utilizing the powder in an additive manufacturing process, wherein the structural component contains a homogeneous dispersion of the TiC particles, the Al₃Ti particles, and the Al₃(Sc,Zr) particles.

As previously noted above, though the foregoing detailed description describes certain aspects of one or more particular embodiments of the invention and investigations associated with the invention, alternatives could be adopted by one skilled in the art. As such, and again as was previously noted, it should be understood that the invention is not necessarily limited to any particular embodiment described herein or illustrated in the drawings.

## Claims

1. A method for manufacturing a structural component, the method comprising:
reacting graphite with titanium in the form of K₂TiF₆ or pure Ti metal or elemental Ti in molten aluminum with at least one alloying element added to form a first melt;
casting an ingot with the first melt, wherein the ingot is an Al-Ti-C metal matrix composite containing TiC particles, Al₃Ti particles and particles of a compound of aluminum with the at least one alloying element all dispersed in an aluminum alloy matrix;
remelting the ingot to form a second melt;
forming a powder of the metal matrix composite by an atomization process of the second melt in vacuum; and
fabricating a structural component utilizing the powder in an additive manufacturing process.

2. The method of claim 1, wherein the at least one alloying element is scandium and the compound of aluminum with the at least one alloying element is Al₃Sc or wherein the at least one alloying element is zirconium and the compound of aluminum with the at least one alloying element is Al₃Zr.

3. The method of claim 1 or 2, wherein the structural component contains a homogeneous dispersion of the TiC particles, the Al₃Ti particles, and the particles of the compound.

4. The method of any of claims 1 to 3 further comprising heat treating the structural component, optionally wherein the heat treating is done by laser heating of the powder during the additive manufacturing process of the structural component or optionally wherein the heat treating is performed on the structural component after the additive manufacturing process.

5. The method of claim 3, wherein the heat treating comprises precipitation hardening by precipitates of the compound of aluminum with the alloying element and dissolved TiC.

6. The method of claim 2, further comprising precipitation hardening wherein the precipitates comprise Al₃Sc.

7. The method of any of claims 1 to 6, wherein the at least one alloying element comprises two alloying elements, optionally wherein the two alloying elements are scandium and zirconium, and the compound is Al₃Sc and Al₃Zr.

8. The method of any of claims 1 to 7, wherein the at least one alloying element is a rare earth element.

9. A structural component made of an Al-Ti-C metal matrix composite, wherein TiC particles, Al₃Ti particles, and Al₃Sc particles are dispersed in an aluminum-based matrix.

10. The structural component of claim 9, wherein at least some TiC particles are along grain boundaries of the metal matrix composite and at least some Al₃Sc particles are inside grains of the metal matrix composite.

11. The structural component of claim 10, wherein the TiC particles along the grain boundaries have an average size of about 2 micrometers and smaller TiC particles are inside aluminum gains and have an average size of about 80 nanometers.

12. The structural complement of claim 10 or 11, wherein the Al₃Sc particles have an average size of about 80 nanometers.

13. The structural component of any of claims 9 to 12, wherein the structural component is an aircraft engine or an aircraft component.

14. The structural component of any of claims 9 to 12, wherein the structural component is an automotive engine or an automotive component.

15. A method for manufacturing a structural component, the method comprising:
reacting graphite with titanium in the form of K₂TiF₆ or pure Ti metal or elemental Ti in molten aluminum with at least one alloying element added to form a first melt, the at least one alloying element being scandium and/or zirconium;
casting an ingot with the first melt, wherein the ingot is an Al-Ti-C metal matrix composite containing TiC particles, Al₃Ti particles, and Al₃(Sc,Zr) particles all dispersed in an aluminum matrix;
remelting the ingot to form a second melt and adding an additional amount of the at least one alloying element to the second melt;
forming a powder of the metal matrix composite by an atomization process of the second melt, wherein the grains of the powder contain TiC particles, Al₃Ti particles, and Al₃(Sc,Zr) particles all dispersed in an aluminum matrix; and
fabricating a structural component utilizing the powder in an additive manufacturing process, wherein the structural component contains a homogeneous dispersion of the TiC particles, the Al₃Ti particles, and the Al₃(Sc,Zr) particles.
